# EUROPÄISCHE PATENTSCHRIFT

(11) **EP 3 571 419 B1**
(45) Veröffentlichungstag und Bekanntmachung des Hinweises auf die Patenterteilung: **17.02.2021**
(21) Anmeldenummer: 18700718.2
(22) Anmeldetag: 08.01.2018
(51) Int. Cl.: F16B 13/08

(54) **KIPPDÜBEL FÜR EINE HOHLRAUMBEFESTIGUNG**
TOGGLE BOLT FOR CAVITY SECURING
CHEVILLE À BASCULE POUR FIXATION POUR CORPS CREUX

(30) Priorität: 17.01.2017 DE 102017100845
(43) Veröffentlichungstag der Anmeldung: 27.11.2019
(73) Patentinhaber: fischerwerke GmbH & Co. KG, 72178 Waldachtal (DE)
(72) Erfinder: DALY, Aaron, 72285 Pfalzgrafenweiler (DE)
(86) Internationale Anmeldenummer: PCT/EP2018/050372
(87) Internationale Veröffentlichungsnummer: WO 2018/134070

(56) Entgegenhaltungen:
- DE-A1- 2 721 768
- DE-A1-102015 116 421
- US-A- 4 197 781

## Beschreibung

Die Erfindung betrifft einen Kippdübel für eine Hohlraumbefestigung mit den Merkmalen des Oberbegriffs des Anspruchs 1. Der Kippdübel ist insbesondere für eine Befestigung an einer Platte, beispielsweise einer Gipskartonplatte, mit einem dahinterliegenden Hohlraum vorgesehen und eignet sich ebenfalls zu einer Befestigung an Lochziegeln, Hohlblocksteinen und dergleichen. Andere Befestigungen sind nicht ausgeschlossen.

Ein Kippdübel für eine Befestigung an einer Platte mit einem dahinterliegenden Hohlraum ist aus der Offenlegungsschrift DE 10 2015 116 421 A1 bekannt. Der bekannte Kippdübel weist einen balkenförmigen Grundkörper aus Kunststoff auf, der länger als breit und dick ist, so dass er sich in seiner Längsrichtung durch ein Loch in einer Platte mit einem dahinterliegenden Hohlraum durchstecken lässt, dessen Lochrand er hintergreift, wenn er nach dem Durchstecken auf einer Rückseite der Platte quer gestellt wird. In einer Längsmitte weist der Grundkörper des bekannten Kippdübels ein Schraubenloch mit einem Innengewinde auf, das durch den Grundkörper in Richtung seiner Dicke durchgeht. Zu einer Befestigung eines Gegenstands an dem den Lochrand hintergreifenden, auf der Rückseite der Platte quer gestellten Grundkörper des bekannten Kippdübels kann eine Schraube in das Innengewinde des Schraubenlochs geschraubt werden. Eine Schraube mit kleinerem Durchmesser kann ohne Gewindeeingriff durch das Schraubenloch durchgeführt werden. Ihr Schraubengewinde kommt mit einem Blechstreifen in Eingriff, der als Widerlagerelement in einem spitzen Winkel zu einer Radialebene des Schraubenlochs in dem Grundkörper einliegt und in das Schraubenloch ragt. Das ermöglicht eine Anpassung an unterschiedliche Schraubendurchmesser und an Schraubengewinde, die nicht zum Innengewinde des Schraubenlochs passen.

Aufgabe der Erfindung ist, einen Kippdübel vorzuschlagen, der einen stabileren Halt einer Schraube und/oder eine stabilere Abstützung an einer Rückseite beispielsweise einer Platte gewährleistet.

Diese Aufgabe wird erfindungsgemäß durch die Merkmale des Anspruchs 1 gelöst. Der erfindungsgemäße Kippdübel weist eine Traverse mit einem Grundkörper aus Kunststoff und einem Zugelement auf, das eine höhere Zugfestigkeit als der Grundkörper aufweist und insbesondere aus Metall besteht. Die Traverse, also der Grundkörper mit dem Zugelement, ist länger als breit und dick, so dass sie in ihrer Längsrichtung axial zu einem Loch in beispielsweise einer Platte ausgerichtet durch das Loch durchsteckbar ist und einen Lochrand hintergreift, wenn sie nach dem Durchstecken auf einer Rückseite des Lochs quer gestellt wird. Auf der Rückseite des Lochs quergestellt, liegt der Grundkörper des erfindungsgemäßen Kippdübels an gegenüberliegenden Stellen am Lochrand auf der Rückseite der Platte auf, so dass sich ein Gegenstand an ihm befestigen lässt.

Die Traverse des erfindungsgemäßen Kippdübels weist ein Schraubenloch zum Durchführen einer Schraube auf, das die Traverse quer zu ihrer Längsrichtung oder eventuell auch in einem insbesondere spitzen Winkel schräg zu ihrer Längsrichtung durchsetzt. Die Richtung des Schraubenlochs wird hier als Dicke der Traverse aufgefasst. Das Schraubenloch kann ein Innengewinde aufweisen oder gewindelos sein.

Außer dem Zugelement weist der erfindungsgemäße Kippdübel ein oder vorzugsweise zwei in Bezug auf eine Achse des Schraubenlochs einander gegenüber angeordnete Druckelemente auf, die eine durch das Schraubenloch durchgeführte Schraube insbesondere dreiecksförmig, gewölbe- oder fachwerkartig abstützen: das oder die Druckelemente stützen sich an Abstützstellen in einem Abstand vom Schraubenloch an dem Zugelement ab und verlaufen zumindest abschnittsweise schräg zum Zugelement und zur Achse des Schraubenlochs von der/n Abstützstelle/n in Richtung der Achse des Schraubenlochs. Von einer Seite gesehen bilden die Achse des Schraubenlochs, das Zugelement und das oder die Druckelemente ein bzw. zwei Dreiecke, Gewölbe oder Fachwerke. Der Achse des Schraubenlochs zugewandte Enden der Druckelemente ragen durch eine verlängerte Mantelfläche des Schraubenlochs, so dass ein Schraubengewinde einer Schraube, die von einer den Druckelementen gegenüberliegenden Seite durch das Schraubenloch durchgeführt wird, in Eingriff mit dem oder den Druckelementen gelangt. Die Druckelemente können wie das Zugelement aus Metall bestehen.

Das Zugelement erstreckt sich in der Längsrichtung der Traverse, was auch eine schräge Anordnung in einem vorzugsweise spitzen Winkel zur Längsrichtung der Traverse einschließt, und umschließt das Schraubenloch mit oder ohne Spiel, so dass das Zugelement zugfest mit einer das Schraubenloch durchgreifenden Schraube verbunden werden kann. Dazu muss das Zugelement das Schraubenloch nicht vollständig umschließen, es genügt, wenn das Zugelement eine das Schraubenloch durchgreifende Schraube so um- bzw. hintergreift, dass das Zugelement zugfest mit der Schraube verbindbar ist. Dadurch kann das Zugelement eine auf es ausgeübte Zugkraft als Querkraft auf die Schraube übertragen.

"Schräg" bedeutet auch, dass sich die der Achse des Schraubenlochs zugewandten Enden der Druckelemente weiter weg von dem Zugelement befinden als die Abstützstellen der Druckelemente am Zugelement. Dadurch wird eine auf die Schraube ausgeübte Zugkraft von den Druckelementen als Druckkraft schräg von der Schraube weg an den Abstützstellen auf das Zugelement und im Zugelement als Zugkraft und dann als Querkraft auf die Schraube oder als innere Zugkraft im Zugelement zwischen den Abstützstellen übertragen. Außerdem überträgt das oder übertragen die Druckelemente eine auf die Schraube ausgeübte Zugkraft als Druckkraft an die vom Schraubenloch der Traverse beabstandeten Abstützstellen, was die Traverse von einer Querbeanspruchung entlastet. Ebenfalls wird ein Lochrand eines Lochs einer Platte, auf deren Rückseite die Traverse des erfindungsgemäßen Kippdübels quer gestellt ist, entlastet, und die Traverse stützt sich stärker an den Abstützstellen mit Abstand von dem Loch an der Rückseite der Platte ab.

Vorzugsweise stützt sich das oder stützen sich die Druckelemente gelenkig am Zugelement ab. Möglich ist auch ein oder sind mit dem oder den Zugelement/en einstückige Druckelemente.

Bei Vorhandensein zweier Druckelemente auf gegenüberliegenden Seiten des Schraubenlochs kann die Traverse des erfindungsgemäßen Kippdübels ein um das Schraubenloch herum geführtes Zugelement aufweisen, das die beiden Druckelemente an einander in Bezug auf das Schraubenloch gegenüberliegenden und vom Schraubenloch beabstandeten Abstützstellen abstützt. Dadurch werden von einer auf Zug beanspruchten Schraube als Druckkräfte in die Druckelemente eingeleitete Kräfte von dem Zugelement als innere Zugkräfte zwischen den Abstützstellen übertragen, ohne nach außen wirkende Kräfte. In diesem Fall ist es nicht notwendig, dass das Zugelement das Schraubenloch umschließt und zugfest mit einer das Schraubenloch durchgreifenden Schraube verbunden ist, sondern es ist auch möglich, dass das Zugelement seitlich am Schraubenloch vorbei tritt. Möglich sind auch zwei Zugelemente.

Ein Abstand einander zugewandter Enden zweier gegenüberliegend angeordneter Druckelemente ist vorzugsweise kleiner als ein Durchmesser des Schraubenlochs, so dass ein Schraubengewinde einer durch das Schraubenloch durchgeführten Schraube zuverlässig in Eingriff mit den Druckelementen gelangen kann und eine auf die Schraube ausgeübte Zugkraft als Druckkraft in die Druckelemente eingeleitet wird. Beim Durchführen durch das Schraubenloch und zwischen die Druckelemente drückt eine Schraube die beiden Druckelemente so weit vom Grundkörper des Kippdübels weg und von der Schraube nach außen, dass die Schraube zwischen den Druckelementen durchtreten kann.

Möglich ist ein Zugelement, das das Schraubenloch mit einem kleineren Durchmesser umschließt als der Grundkörper der Traverse. Vorzugsweise weist das Zugelement ein Innengewinde in dem Schraubenloch auf. Das ermöglicht ein Durchschrauben einer Schraube durch das Zugelement. Eine Schraube mit kleinerem Durchmesser lässt sich ohne Drehen durch das Schraubenloch mit Innengewinde des Zugelements durchführen. In beiden Fällen gelangt ein Schraubengewinde der Schraube in Eingriff mit dem oder den Druckelementen, so dass eine auf die Schraube ausgeübte Zugkraft von den schräg stehenden Druckelementen als Druckkraft schräg nach außen übertragen wird.

Zur Bildung eines Widerlagers zum Abstützen des oder der Druckelemente weist das Zugelement bei einer Ausgestaltung der Erfindung eine Abwinklung an der oder den Abstützstellen des oder der Druckelemente auf. Ein Gelenk oder ein gelenkiges Ineinandergreifen der Druckelemente und des Zugelements an den Abstützstellen ist möglich, aber nicht notwendig. An den Abstützstellen kann sich Kunststoff des Grundkörpers zwischen den Druckelementen und dem Zugelement befinden, so dass sich die Druckelemente nicht unmittelbar, sondern mittelbar über den zwischenliegenden Kunststoff an dem Zugelement abstützen.

Die Erfindung wird nachfolgend anhand eines in der Zeichnung dargestellten Ausführungsbeispiels näher erläutert. Es zeigen:

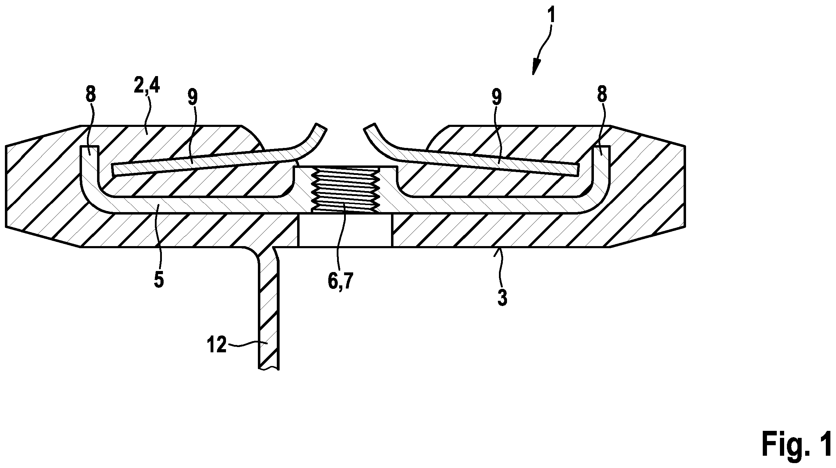

- Figur 1: einen Längsschnitt eines Kippdübels gemäß der Erfindung; und
- Figuren 2 und 3: Verwendungen des Kippdübels aus Figur 1.

Der in den Figuren dargestellte, erfindungsgemäße Kippdübel 1 weist eine zylindrische Traverse 2 mit einer abgeflachten, ebenen Längsseite auf, die hier als Unterseite 3 bezeichnet wird. Enden der Traverse 2 verjüngen sich kegelstumpfförmig. Die Traverse 2 ist länger als sie breit und dick ist, so dass sie sich mit ihrer Längsrichtung axial zu einem Loch 11 einer Platte 10 ausgerichtet durch das Loch 11 durchstecken und nach dem Durchstecken auf einer Rückseite des Lochs 11 querstellen lässt, so dass sie einen Lochrand 13 an gegenüberliegenden Stellen übergreift und die Unterseite 3 an der Platte 10 anliegt.

Die Traverse 2 weist einen Grundkörper 4 aus Kunststoff und einen in den Kunststoff eingebetteten Blechstreifen als Zugelement 5 mit einer höheren Zugfestigkeit als der Grundkörper 4 auf. Das Zugelement 5 verläuft in der Längsrichtung der Traverse 2 parallel zu seiner Unterseite 3. In seiner Mitte weist die Traverse 2 ein Schraubenloch 6 auf, das durch eine Mitte des Zugelements 5 durchgeht und im Zugelement 5 ein Innengewinde 7 aufweist. An der Unterseite 3 geht das Schraubenloch 6 mit einem Durchmesser durch den Grundkörper 4 durch, der größer als der Durchmesser des Innengewindes 7 ist. Auf einer der Unterseite 3 abgewandten Oberseite ist das Durchgangsloch 6 durch eine großflächige Ausnehmung des Grundkörpers 4 freigelegt. Das Schraubenloch 6 durchgreift die Traverse 2 des erfindungsgemäßen Kippdübels 1 quer zur Unterseite 3 und quer zum Zugelement 5, was hier als Richtung einer Dicke der Traverse 2 aufgefasst wird.

Enden des Zugelements 5 sind als Abstützstellen 8 für zwei Druckelemente 9 von der Unterseite 3 weg abgewinkelt. Die Druckelemente 9 sind Blechstreifen, die schräg in spitzen Winkeln zum Zugelement 5 von den Abstützstellen 8 in Richtung des Schraubenlochs 6 verlaufend teilweise in den Grundkörper 4 eingebettet sind und in der das Schraubenloch 6 freiliegenden Ausnehmung frei liegen. In Bezug auf das Schraubenloch 6 sind die beiden Druckelemente 9 einander gegenüber angeordnet. Am Schraubenloch 6 weisen die Druckelemente 9 einen größeren Abstand vom Zugelement 5 auf als mit Abstand vom Schraubenloch 6 an den Abstützstellen 8. Zwischen dem Schraubenloch 6 fernen Enden der Druckelemente 9 und den die Abstützstellen 8 bildenden Abwinklungen des Zugelements 5 befindet sich Kunststoff des Grundkörpers 4, so dass sich die Druckelemente 9 mittelbar an den Abstützstellen 8 am Zugelement 5 abstützen. Aufgrund einer Elastizität des Kunststoffs des Grundkörpers 4 und ihres teilweisen Freiliegens stützen sich die Druckelemente 9 gelenkig am Zugelement 5 ab. Dem Schraubenloch 6 zugewandte Endbereiche der Druckelemente 9 sind in einem stumpfen Winkel von der Unterseite 3 weg gebogen. Dem Schraubenloch 6 zugewandte Enden der Druckelemente 9 gehen durch eine verlängerte Mantelfläche des Schraubenlochs 6 durch, so dass axial zum Schraubenloch 6 gesehen die Enden der Druckelemente 9 das Schraubenloch 6 teilweise überdecken. Ein Abstand der einander und dem Schraubenloch 6 zugewandten Enden der Druckelemente 9 ist kleiner als ein Durchmesser des Schraubenlochs 6.

Zu einer Befestigung an einer Platte 10, beispielsweise einer Gipskartonplatte, wird der Kippdübel 1 durch ein Loch 11 in der Platte 10 durchgesteckt, dessen Durchmesser mindestens so groß wie die Traverse 2 des Kippdübels 1 breit und dick, und dessen Durchmesser kleiner als die Traverse 2 lang ist. Zum Durchstecken wird die Traverse 2 mit ihrer Längsrichtung axial zum Loch 11 ausgerichtet. Zum Handhaben beim Durchstecken durch das Loch 11 weist der Kippdübel 1 ein mit dem aus Kunststoff bestehenden Grundkörper 4 einstückiges Band 12 auf, das neben dem Schraubenloch 6 von der Unterseite 3 der Traverse 2 absteht. Aufgrund einer Elastizität lässt sich das Band 12 zum Durchstecken der Traverse 2 durch das Loch 11 in der Platte 10 an die Unterseite 3 der Traverse 2 anlegen.

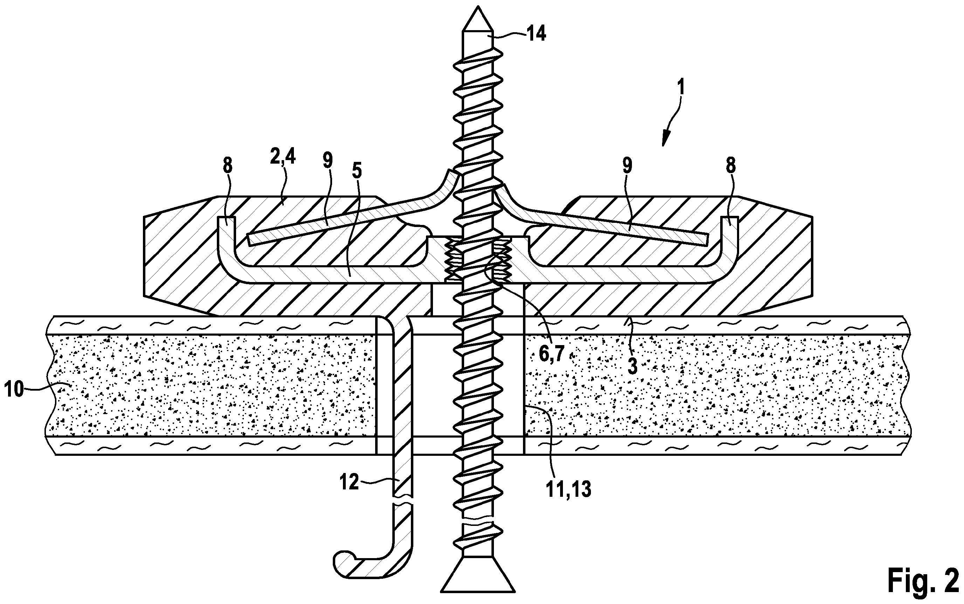

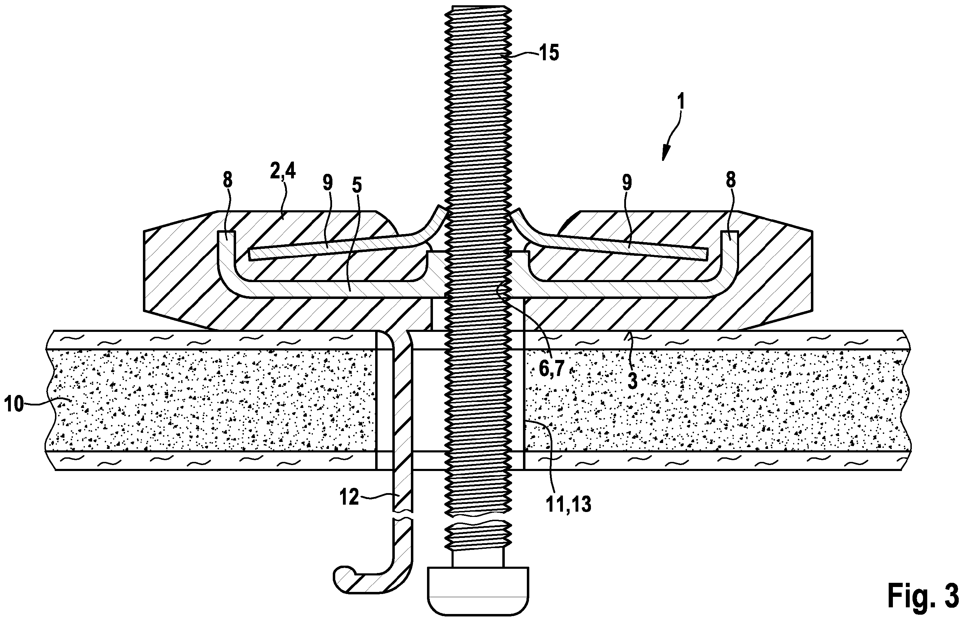

Sobald die Traverse 2 auf einer Rückseite der Platte 10 vollständig aus dem Loch 11 ausgetreten ist, stellt sie sich aufgrund der Elastizität des Bandes 12 schräg oder quer zum Band 12 und lässt sich am Band 12 zurückziehen, so dass sie auf der Rückseite der Platte 10 aufliegt und die Rückseite der Platte 10 an gegenüberliegenden Stellen eines Lochrands 13 des Lochs 11 hintergreift, wie es in Figuren 2 und 3 zu sehen ist. Wie in Figur 2 gezeigt, kann eine Schraube 14, beispielsweise eine Holzschraube, deren Schraubengewinde einen kleineren Durchmesser als das Innengewinde 7 in der Traverse 2 aufweist, durch das Loch 11 in der Platte 10 in das Schraubenloch 6 durchgeführt werden. Dabei kommt das Schraubengewinde in Eingriff mit den ihm zugewandten Enden der Druckelemente 9, die die Schraube 14 vom Zugelement 5 weg und von der Schraube 14 zur Seite drückt. Dadurch passen sich die Druckelemente 9 an einen Durchmesser des Schraubengewindes der Schraube 14 an. Beim Durchführen der Schraube 14 durch das Schraubenloch 6 wird der Kippdübel 1 an seinem Band 12, das seitlich neben der Schraube 14 durch das Loch 11 auf eine Vorderseite der Platte 10 durchtritt, in Anlage an der Rückseite der Platte 10 gehalten. Eine auf die Schraube 14 ausgeübte Zugkraft überträgt die Schraube 14 aufgrund ihres Gewindeeingriffs als Druckkräfte auf die Druckelemente 9, die die Druckkräfte an den Abstützstellen 8 in das Zugelement 5 einleiten. In dem Zugelement 5 wirken die Kräfte als innere Zugkraft, ohne dass Kräfte nach außen frei werden. Die Schraube 14, die Druckelemente 9 und das Zugelement 5 bilden zwei einander in einer Axialebene der Schraube 14 gegenüberliegende Dreiecke, die eine auf die Schraube 14 ausgeübte Zugkraft an den Abstützstellen 8 als innere Zugkraft in das Zugelement 5 einleiten.

In Figur 3 ist eine Maschinenschraube 15 mit einem zum Innengewinde 7 des Schraubenlochs 6 in der Traverse 2 des erfindungsgemäßen Kippdübels 1 komplementären Schraubengewinde durch das Schraubenloch 6 der Traverse 2 durchgeschraubt. Auch ihr Schraubengewinde tritt in Eingriff mit den Enden der Druckelemente 9. Wird eine Zugkraft auf die Maschinenschraube 15 ausgeübt, belastet sie die Traverse 2 in ihrer Mitte durch den Eingriff im Innengewinde 7 des Schraubenlochs 6 quer. Zugleich stützen die Druckelemente 9 wie vorstehend zu Figur 2 erläutert durch den Eingriff der Druckelemente 9 am Schraubengewinde die Maschinenschraube 15 ab. Die Druckelemente 9 stützen die Maschinenschraube 15 an den vom Schraubenloch 6 und dem Loch 11 in der Platte 10 beabstandeten Abstützstellen 8 ab.

### Bezugszeichenliste

- 1: Kippdübel
- 2: Traverse
- 3: Unterseite
- 4: Grundkörper
- 5: Zugelement
- 6: Schraubenloch
- 7: Innengewinde
- 8: Abstützstelle
- 9: Druckelement
- 10: Platte
- 11: Loch
- 12: Band
- 13: Lochrand
- 14: Schraube
- 15: Maschinenschraube

## Patentansprüche

1. Kippdübel für eine Hohlraumbefestigung, mit einer Traverse (2), die länger als breit und dick ist, wobei die Traverse (2) einen Grundkörper (4) aus Kunststoff und ein Schraubenloch (6) zum Durchführen einer Schraube (14; 15) aufweist, das die Traverse (2) in Richtung ihrer Dicke durchsetzt, wobei am Grundkörper (4) ein Druckelement (9) angeordnet ist, so dass das Druckelement (9) mit einem Schraubengewinde (6) einer durch das Schraubenloch (6) durchgeführten Schraube (14; 15) in Eingriff bringbar ist, **dadurch gekennzeichnet, dass** am Grundkörper (4) ein Zugelement (5) angeordnet ist, dass das Zugelement (5) eine höhere Zugfestigkeit als der Grundkörper (4) aufweist, dass das Zugelement (5) das Schraubenloch (6) in der Traverse (2) umschließt, so dass das Zugelement (5) zugfest mit einer das Schraubenloch (6) durchgreifenden Schraube (14; 15) verbindbar ist, dass sich das Zugelement (5) in einer Längsrichtung der Traverse (2) erstreckt, und dass das Druckelement (9) sich in einem Abstand vom Schraubenloch (6) an dem Zugelement (5) abstützt und von einer Abstützstelle (8) an dem Zugelement (5) schräg zum Zugelement (5) bis durch eine verlängerte Mantelfläche des Schraubenlochs (6) der Traverse (2) verläuft.

2. Kippdübel nach Anspruch 1, **dadurch gekennzeichnet, dass** sich das Druckelement (9) gelenkig am Zugelement (5) abstützt.

3. Kippdübel nach Anspruch 1 oder 2, **dadurch gekennzeichnet, dass** sich das oder ein zweites Zugelement (5) auf zwei gegenüberliegenden Seiten vom Schraubenloch (6) weg in der Längsrichtung der Traverse (2) erstreckt und dass der Kippdübel (1) zwei Druckelemente (9) auf den beiden gegenüberliegenden Seiten des Schraubenlochs (6) aufweist, die sich an dem/den Zugelement/en (5) abstützen.

4. Kippdübel nach Anspruch 3, **dadurch gekennzeichnet, dass** ein Abstand zwischen den beiden Druckelementen (9) kleiner als ein Durchmesser des Schraubenlochs (6) im Zugelement (5) ist.

5. Kippdübel nach einem der vorhergehenden Ansprüche, **dadurch gekennzeichnet, dass** das Zugelement (5) ein Innengewinde (7) in dem Schraubenloch (6) aufweist.

6. Kippdübel nach einem der vorhergehenden Ansprüche, **dadurch gekennzeichnet, dass** das Zugelement (5) an der/n Abstützstelle/n (8) zu einem Abstützen des/r Druckelements (9) abgewinkelt ist.

7. Kippdübel nach einem der vorhergehenden Ansprüche, **dadurch gekennzeichnet, dass** sich Kunststoff des Grundkörpers (4) an der/n Abstützstelle/n (8) zwischen dem/n Druckelement/en (9) und dem Zugelement (5) befindet.

8. Kippdübel nach einem der vorhergehenden Ansprüche, **dadurch gekennzeichnet, dass** das Zugelement (5) und/oder das Druckelement (9) aus Metall bestehen.

## Claims

1. Toggle fixing for a cavity fixing, having a crossmember (2) which is longer than it is wide and thick, the crossmember (2) having a main body (4) made of plastics material and a screw hole (6) for passage of a screw (14; 15), which screw hole passes through the crossmember (2) in the direction of its thickness, wherein a compression element (9) is arranged on the main body (4) so that the compression element (9) can be brought into engagement with a screw thread (6) of a screw (14; 15) passed through the screw hole (6), **characterised in that** a tension element (5) is arranged on the main body (4); the tension element (5) has a higher tensile strength than the main body (4); the tension element (5) surrounds the screw hole (6) in the crossmember (2) so that the tension element (5) is connectible, so as to be resistant to tension, to a screw (14; 15) passing through the screw hole (6); the tension element (5) extends in a longitudinal direction of the crossmember (2); and the compression element (9) is supported on the tension element (5) at a distance from the screw hole (6) and runs obliquely with respect to the tension element (5) from a support point (8) on the tension element (5) through an extended wall surface of the screw hole (6) of the crossmember (2).

2. Toggle fixing according to claim 1, **characterised in that** the compression element (9) is articulatedly supported on the tension element (5).

3. Toggle fixing according to claim 1 or 2, **characterised in that** the tension element or a second tension element (5) extends on two opposite sides away from the screw hole (6) in the longitudinal direction of the crossmember (2); and the toggle fixing (1) has two compression elements (9) on the two opposite sides of the screw hole (6), which compression elements are supported on the tension element(s) (5).

4. Toggle fixing according to claim 3, **characterised in that** a distance between the two compression elements (9) is smaller than a diameter of the screw hole (6) in the tension element (5).

5. Toggle fixing according to any one of the preceding claims, **characterised in that** the tension element (5) has an internal thread (7) in the screw hole (6).

6. Toggle fixing according to any one of the preceding claims, **characterised in that** the tension element (5) is bent at an angle at the support point(s) (8) to support the compression element(s) (9).

7. Toggle fixing according to any one of the preceding claims, **characterised in that** at the support point(s) (8) plastics material of the main body (4) is located between the compression element(s) (9) and the tension element (5).

8. Toggle fixing according to any one of the preceding claims, **characterised in that** the tension element (5) and/or the compression element (9) consist(s) of metal.

## Revendications

1. Cheville à bascule pour une fixation pour corps creux, comprenant une traverse (2), qui est plus longue que large et épaisse, la traverse (2) comprenant un corps de base (4) en matière plastique et un trou de vis (6) pour le passage d'une vis (14 ; 15), qui pénètre dans la traverse (2) en direction de son épaisseur, un élément de compression (9) étant agencé sur le corps de base (4), de telle sorte que l'élément de compression (9) puisse être mis en prise avec un filetage de vis (6) d'une vis (14 ; 15) traversant le trou de vis (6), **caractérisée en ce qu'**un élément de traction (5) est agencé sur le corps de base (4), **en ce que** l'élément de traction (5) présente une résistance à la traction plus élevée que le corps de base (4), **en ce que** l'élément de traction (5) entoure le trou de vis (6) dans la traverse (2), de telle sorte que l'élément de traction (5) puisse être relié de manière immobile en traction avec une vis (14 ; 15) traversant le trou de vis (6), **en ce que** l'élément de traction (5) s'étend dans une direction longitudinale de la traverse (2), et **en ce que** l'élément de compression (9) s'appuie à une distance du trou de vis (6) sur l'élément de traction (5) et s'étend à partir d'un emplacement d'appui (8) sur l'élément de traction (5) en biais par rapport à l'élément de traction (5) au travers d'un prolongement de la surface d'enveloppe du trou de vis (6) de la traverse (2).

2. Cheville à bascule selon la revendication 1, **caractérisée en ce que** l'élément de compression (9) repose de manière souple sur l'élément de traction (5).

3. Cheville à bascule selon la revendication 1 ou 2, **caractérisée en ce que** l'élément de traction ou un deuxième élément de traction (5) s'étend sur deux côtés opposés à partir du trou de vis (6) dans la direction longitudinale de la traverse (2) et **en ce que** la cheville à bascule (1) comprend deux éléments de compression (9) sur les deux côtés opposés du trou de vis (6), qui s'appuient sur le ou les éléments de traction (5).

4. Cheville à bascule selon la revendication 3, **caractérisée en ce qu'**une distance entre les deux éléments de compression (9) est inférieure à un diamètre du trou de vis (6) dans l'élément de traction (5) .

5. Cheville à bascule selon l'une quelconque des revendications précédentes, **caractérisée en ce que** l'élément de traction (5) comprend un filetage intérieur (7) dans le trou de vis (6).

6. Cheville à bascule selon l'une quelconque des revendications précédentes, **caractérisée en ce que** l'élément de traction (5) est coudé au niveau du ou des emplacements d'appui (8) pour former un appui du ou des éléments de compression (9).

7. Cheville à bascule selon l'une quelconque des revendications précédentes, **caractérisée en ce que** de la matière plastique du corps de base (4) se trouve au niveau du ou des emplacements d'appui (8) entre le ou les éléments de compression (9) et l'élément de traction (5).

8. Cheville à bascule selon l'une quelconque des revendications précédentes, **caractérisée en ce que** l'élément de traction (5) et/ou l'élément de compression (9) sont constitués de métal.
